# EUROPEAN PATENT SPECIFICATION

(11) **EP 3 704 861 B1**
(45) Date of publication and mention of the grant of the patent: **24.08.2022**
(21) Application number: 18811968.9
(22) Date of filing: 29.10.2018
(51) Int. Cl.: H04N 21/41

(54) **NETWORKED USER INTERFACE BACK CHANNEL DISCOVERY VIA WIRED VIDEO CONNECTION**
VERNETZTE BENUTZERSCHNITTSTELLENRÜCKKANALENTDECKUNG ÜBER EINE KABELGEBUNDENE VIDEOVERBINDUNG
DÉCOUVERTE DE CANAL DE RETOUR D'INTERFACE UTILISATEUR EN RÉSEAU PAR CONNEXION VIDÉO FILAIRE

(30) Priority: 02.11.2017 US 201715801789
(43) Date of publication of application: 09.09.2020
(73) Proprietor: Microsoft Technology Licensing, LLC, Redmond, WA 98052-6399 (US)
(72) Inventor: PATTERSON, Douglas Robert Millar, Redmond, Washington 98052-6399 (US)
(74) Representative: CMS Cameron McKenna Nabarro Olswang LLP
(86) International application number: PCT/US2018/057900
(87) International publication number: WO 2019/089398

(56) References cited:
- US-A1- 2014 059 628
- US-A1- 2017 285 813

## Description

### Background

As computing technology has advanced, situations where users desire to connect two computing devices to one another have become increasingly commonplace. For example, a user entering a room may desire to connect his or her mobile computing device to a collaboration device present in the room, allowing the user to present on the collaboration device content from his or her mobile computing device. Although such connections are desirable, it can be difficult for users to quickly and easily make such connections, resulting in user dissatisfaction or frustration with their devices.

US 2014/059628 A1 describes a display device such as a TV which has both HDMI and IP network interfaces and uses the HDMI interface to exchange IP network parameters with an audio video application module (AVAM) upon HDMI connection. In this way, an IP-based peer-to-peer or client-server network connection can be automatically established to promote faster communication when sharing and executing applications between the devices than is typically available over the CEC link of HDMI.

US 2017/285813 A1 describes touch-input support for an external touch-capable display device. A computing device (e.g., a smartphone) is configured to form a connection with an external touch-capable display device that is separate from the computing device. The computing device controls the display of information on the touch-capable display device. A user of the computing device can interact with the external touch-capable display device, such as by touching the screen of the touch-capable display device to select items, perform gestures, or type on the on-screen keyboard. When the user provides touch-input to the external touch-capable display device, the computing device receives an indication of the touch-input via the wired or wireless connection. The computing device then modifies the display of information on the touch-capable display device based on the touch-input.

### Summary

According to aspects of the present invention there is provided methods and a display device as defined in the accompanying claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In accordance with one or more aspects, a display device receives, from a presentation device via a wired video connection to the display device, a request for information regarding how to connect to the display device via a network. The display device sends the requested information to the presentation device via the wired video connection, and establishes, in response to a request from the presentation device based on the requested information, a network connection to the presentation device. Video received from the presentation device via the wired video connection is displayed by the display device. While displaying the video, user input to the display device is received and data describing the user input is sent to the presentation device via the network connection.

In accordance with one or more aspects, a presentation device sends to a display device via a wired video connection from the presentation device, a request for information regarding how to connect to the display device via a network. The presentation device receives, from the display device via the wired video connection, the requested information and based on the received information establishes a network connection to the display device. The presentation device sends video to the display device via the wired video connection for display by the display device. The presentation device receives, from the display device via the network connection, data describing user input to the display device received by the display device while displaying the video, and processes the data describing the user input.

### Brief Description of the Drawings

The detailed description is described with reference to the accompanying figures. In the figures, the left-most digit(s) of a reference number identifies the figure in which the reference number first appears. The use of the same reference numbers in different instances in the description and the figures may indicate similar or identical items. Entities represented in the figures may be indicative of one or more entities and thus reference may be made interchangeably to single or plural forms of the entities in the discussion.
Fig. 1 illustrates an example system implementing the networked user interface back channel discovery via wired video connection.
Fig. 2 illustrates an example system including the presentation device and the display device.
Figs. 3A and 3B are a flowchart illustrating an example process for implementing the networked user interface back channel discovery via wired video connection.
Fig. 4 illustrates an example system that includes an example computing device that is representative of one or more systems and/or devices that may implement the various techniques described herein.

### Detailed Description

Networked user interface back channel discovery via wired video connection is discussed herein. A presentation device sends video to a display device via a wired connection (also referred to as a wired video connection). The display device accepts user inputs, such as stylus or touch inputs, inputs via a mouse or other peripheral device, and so forth. Data describing the user inputs received at the display device is communicated to the presentation device via a network connection (which can be a wireless or wired connection). The presentation device can use this received data in various manners, such as changing the video being sent to the display device in response to the received data, saving the received data, and so forth.

In order to establish the connections between the presentation device and the display device, the presentation device is plugged into the display device using a wired video connection, such as a High-Definition Multimedia Interface (HDMI) cable, a DisplayPort cable, and so forth. The presentation device sends a request to the display device via the wired video connection, the request being a request for information regarding how to connect to the display device via a network. The display device returns the requested information, which can take various forms such as a network address of the display device, an identifier of the display device that allows the display device to be distinguished from other display devices the presentation device may be connected to, and so forth. The presentation device receives the requested information and uses the received information to establish a network connection to the display device.

The techniques discussed herein allow the presentation device to be quickly and easily connected to the display device. The user need simply plug his or her presentation device into a video cable (e.g., an HDMI or DisplayPort cable) that is connected to the display device, and the presentation device automatically obtains from the display device the information regarding how to connect to the display device via a network. The network connection can be automatically established between the presentation device and the display device, and the user need not try to identify which display device he or she is connected to, need not select from a list of available display devices, and so forth. Furthermore, in situations in which the network connection is a wireless connection, the user need not plug in an additional (e.g., universal serial bus (USB), Ethernet) cable to receive from the display device data describing user input to the display device.

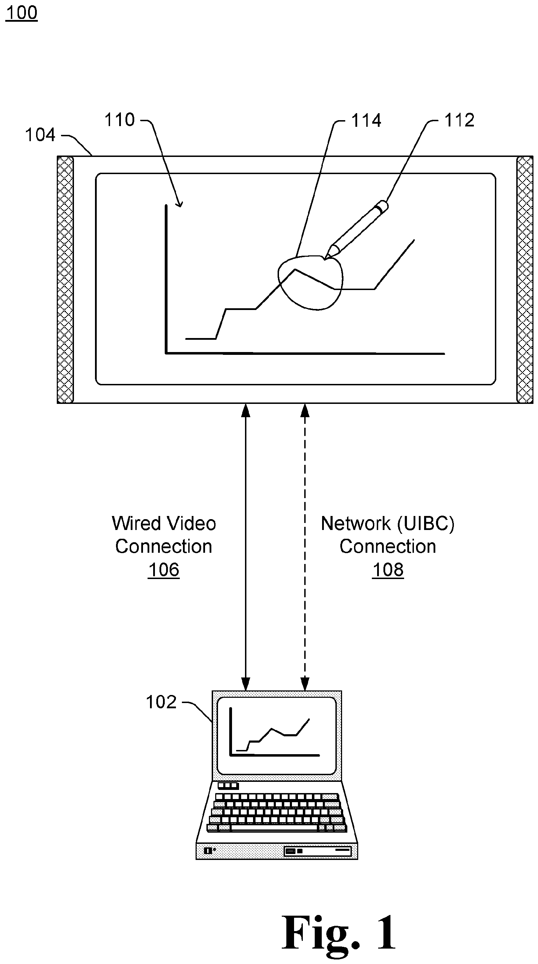

Fig. 1 illustrates an example system 100 implementing the networked user interface back channel discovery via wired video connection. System 100 includes a presentation device 102 that can communicate with a display device 104 via a wired video connection 106 and a network connection 108. The wired video connection 106 is used to send video from the presentation device 102 to the display device 104, and also communicate control information between the presentation device 102 and the display device 104. The network connection 108, also referred to as a user interface back channel (UIBC) is discovered via the wired video connection 106, as discussed in more detail below.

The presentation device 102 can be a variety of different types of devices, such as a desktop computer, a laptop or netbook computer, a mobile device (e.g., a tablet or phablet device, a cellular or other wireless phone (e.g., a smartphone), a notepad computer, a mobile station), a wearable device (e.g., eyeglasses, head-mounted display, watch, bracelet, augmented reality (AR) devices, virtual reality (VR) devices), an entertainment device (e.g., an entertainment appliance, a set-top box communicatively coupled to a display device, a game console), Internet of Things (IoT) devices (e.g., objects or things with software, firmware, and/or hardware to allow communication with other devices), and so forth. Thus, the presentation device 102 may range from a full-resource device with substantial memory and processor resources (e.g., personal computers, game consoles) to a low-resource device with limited memory and/or processing resources (e.g., hand-held game consoles).

The display device 104 is a device capable of displaying video received from the presentation device 102, and also capable of receiving user inputs to the display device 104. The display device 104 can be a variety of different types of devices, such as a collaboration device or digital whiteboard (e.g., a Microsoft Surface Hub^{®}), a desktop or server computer, a laptop or netbook computer, a mobile device (e.g., a tablet or phablet device, a cellular or other wireless phone (e.g., a smartphone), a notepad computer, a mobile station), an entertainment device (e.g., an entertainment appliance, a set-top box communicatively coupled to a display device, a game console), and so forth. Thus, the display device 104 may range from a full-resource device with substantial memory and processor resources (e.g., a collaboration device) to a low-resource device with limited memory and/or processing resources (e.g., an entertainment device).

The presentation device 102 is plugged into the display device using the wired video connection 106, such as an HDMI cable, a DisplayPort cable, and so forth. The presentation device 102 sends to the display device via the wired video connection 106 a request for information regarding how to connect to the display device 104 via a network. The display device 104 returns the requested information, which can take various forms such as a network address of the display device, an identifier of the display device that allows the display device to be distinguished from other display devices the presentation device 102 may be connected to, and so forth. The presentation device 102 receives the requested information and uses the received information to establish the network connection 108 to the display device 104. The network connection 108 is thus discovered using the wired video connection 106.

The presentation device 102 sends video data to the display device 104 for display by the display device 104. In the example of Fig. 1, the video data includes a chart 110. The presentation device 102 can send the video data at various display rates, such as 30 frames per second or 60 frames per second. The video data is sent via the wired video connection 106.

User inputs can be received at the display device 104. In one or more implementations, the display device 104 can receive digital ink inputs. Generally, digital ink refers to freehand input to a touch-sensing device such as a touchscreen, which is interpreted by the computing device as digital ink (or simply "ink"). Digital ink may be provided in various ways, such as using a pen (e.g., an active pen, a passive pen, and so forth), a stylus 112, a finger, and so forth. In the illustrated example of Fig. 1, a user uses the stylus 112 to draw a circle 114 around a portion of the chart 110. Data describing the user input (e.g., data describing the digital ink that is the circle 114) is sent to the presentation device 102 via the network connection 108. The presentation device 102 can process the data describing the user input in a variety of different manners, such as storing the data (locally or on a remote storage device accessed via a network), incorporating the data into the video that is sent to the display device 104 (e.g., so that the circle 114 is displayed on the display device 104), and so forth.

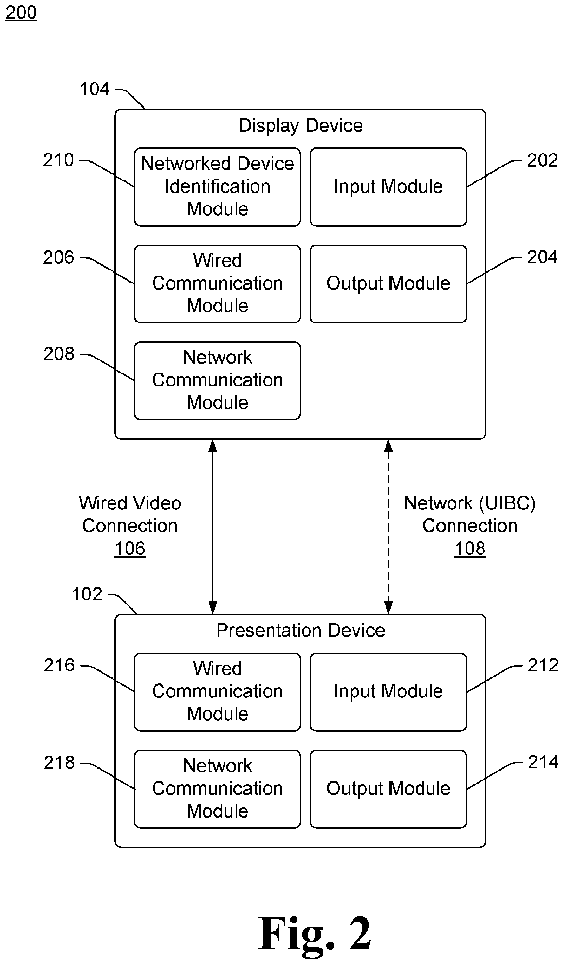

Fig. 2 illustrates an example system 200 including the presentation device 102 and the display device 104 in additional detail. The display device 104 includes an input module 202, an output module 204, a wired communication module 206, and a network communication module 208.

The input module 202 receives user inputs from a user of the display device 104. User inputs can be provided in a variety of different manners, including directly to the display device 104, via peripheral devices connected (wired or wirelessly) to the display device 104, and so forth. For example, user inputs can be provide by pressing one or more keys of a keypad or keyboard of the display device 104, pressing one or more keys of a controller (e.g., remote control device, mouse, trackpad, etc.) of the display device 104, pressing a particular portion of a touchpad or touchscreen of the display device 104, making a particular gesture on a touchpad or touchscreen of the display device 104, and/or making a particular gesture on a controller (e.g., remote control device, mouse, trackpad, etc.) of the display device 104. User inputs can also be provided in other manners, such as via audible inputs to a microphone, via motions of hands or other body parts observed by an image capture device, and so forth.

The output module 204 generates, manages, and/or outputs content for display, playback, and/or other presentation. This content can be created by the output module 204 or obtained from other modules of the display device 104. This content can be, for example, a display or playback portion of a user interface (UI). In one or more example implementations, the output module 204 outputs video received from the presentation device 102 via the wired video connection 106.

The wired communication module 206 manages receiving and sending data via the wired video connection 106. The wired communication module 206 supports one or more protocols for wired video connections, and can support one or both of public protocols and proprietary protocols. In one or more example implementations, the wired video connection 106 is an HDMI cable, and the wired communication module 206 supports communication in accordance with one or more HDMI specifications, such as the HDMI Specification Ver.2.0 (September 4, 2013) or the HDMI Specification Ver.1.4b (October 11, 2011). Additionally or alternatively, the wired video connection 106 is a DisplayPort cable, and the wired communication module 206 supports communication in accordance with one or more DisplayPort specifications, such as the DisplayPort 1.4 standard (March, 2016).

The network communication module 208 manages receiving and sending data via the network connection 108. The network communication module 208 supports one or more protocols for network connections, such as one or both of wireless and wired connections, and can support one or both of public protocols and proprietary protocols. In one or more example implementations, the network connection 108 is a Wi-Fi connection in accordance with one or more Miracast specifications, such as the Wi-Fi Display Technical Specification Version 1.1 (April 24, 2014). Additionally or alternatively, the network connection 108 is a Bluetooth^{®} wireless connection in accordance with one or more Bluetooth^{®} specifications, such as the Bluetooth Core Specification v5.0 (December 6, 2016). Additionally or alternatively, the network connection 108 is a wired connection, such as an Ethernet connection in accordance with one or more Institute of Electrical and Electronics Engineers (IEEE) Ethernet standards, such as the 802.3-2015 IEEE Standard for Ethernet (March 4, 2016).

The presentation device 102 includes an input module 212, an output module 214, a wired communication module 216, and a network communication module 218. The input module 212 receives user inputs from a user of the presentation device 106. User inputs can be provided in a variety of different manners, analogous to the discussion above regarding user inputs to the display device 104 received by the input module 202.

The output module 214 generates, manages, and/or outputs content for display, playback, and/or other presentation. This content can be created by the output module 214 or obtained from other modules of the presentation device 102. In one or more example implementations, the output module 214 outputs video by providing the video to the wired communication module 216 for sending to the display device 104 via the wired video connection 106. The output module 214 can also output video on a local screen of the presentation device 102. The video sent to the display device 104 can be the same video as output on the local screen of the presentation device 102. For example, as shown in Fig. 1, video including a chart 110 can be sent to the display device 104 for display on the display device 104, and concurrently displayed on the screen of the presentation device 102.

The wired communication module 216 manages receiving and sending data via the wired video connection 106. The wired communication module 206 supports one or more protocols for wired video connections, and can support one or both of public protocols and proprietary protocols. The wired communication module 216 supports at least one protocol that is the same as supported by the wired communication module 206. For example, the wired communication module 216 can support communication in accordance with one or more HDMI specifications, communication in accordance with one or more DisplayPort specifications, and so forth.

The network communication module 218 manages receiving and sending data via the network connection 108. The network communication module 218 supports one or more protocols for network connections, such as one or both of wireless connections and wired connections, and can support one or both of public protocols and proprietary protocols. The network communication module 218 supports at least one protocol that is the same as supported by the network communication module 208. For example, the network communication module 218 can support communications in accordance with one or more Miracast specifications, one or more Bluetooth specifications, and so forth.

The display device 104 also includes a networked device identification module 210. In order to establish the network connection 108, the presentation device 102 sends a request to the display device 104 for information regarding how to connect to the display device 104 via a network. This request is sent from the wired communication module 216 via the wired video connection 106. The wired communication module 206 receives the request and communicates with the networked device identification module 210 to obtain the requested information. The wired communication module 206 has the requested information or is able to obtain the requested information. For example, the wired communication module 206 may have an identifier of the display device 104, or may communicate with an operating system of the display device 104 to obtain a current IP network address and port number for wireless communication (e.g., via Wi-Fi) or wired communication (e.g., via Ethernet).

The wired communication module 206 returns the requested information to the presentation device 102 via the wired video connection 106. The wired video connection 106 includes a control channel that allows the wired communication module 216 to send the request to the wired communication module 206, and also allows the wired communication module 206 to send to the wired communication module 216 the requested information regarding how to connect to the display device 104 via a network. For example, if the wired video connection is a DisplayPort cable, then the control channel can be the auxiliary (AUX) channel of the DisplayPort cable. By way of another example, if the wired video connection is an HDMI cable, then the control channel can be the I²C (Inter IC) interface of the HDMI cable.

The requested information regarding how to connect to the display device 104 via a network can be sent from the display device 104 to the presentation device 102 via the wired video connection 106 in a variety of different manners depending on the manner in which the wired video connection 106 is implemented (e.g., the protocol being used by the wired communication module 206 and the wired communication module 216). For example, the requested information regarding how to connect to the display device 104 via a network can be included as part of an Extended Display Identification Data (EDID), which may be sent via an I²C interface. By way of another example, the requested information regarding how to connect to the display device 104 via a network can be included in a control register of a Display Data Channel Command Interface (DDC/CI) interface. By way of yet another example, the requested information regarding how to connect to the display device 104 via a network can be included in an AUX register of an AUX channel.

The requested information regarding how to connect to the display device 104 via a network can take a variety of different forms. Generally, the information can be any information that itself specifies, or that can be used by the presentation device 102 to obtain, an identifier or access information allowing the presentation device 102 to communicate with the display device 104 via one or both of a wired connection and a wireless connection. In one or more example implementations, the information regarding how to connect to the display device 104 via a network is a network address, such as an Internet Protocol (IP) address and port number.

Additionally or alternatively, the information regarding how to connect to the display device 104 via a network can take other forms, such as an identifier (e.g., an alphanumeric string) of the display device 104 that allows the display device 104 to be distinguished from other display devices. The network communication module 218 can use the identifier to access a database or other record mapping identifiers to network addresses. This database or record can be maintained at the presentation device 102 and/or can be maintained elsewhere (e.g., a remote storage device accessed by the presentation device 102 via a network). The database or record can be maintained in any of a variety of storage devices, such as RAM, a solid-state storage device, a magnetic disk drive, and so forth. The presentation device 102 accesses the database or other record and obtains the network address (e.g., IP address and port number) that matches the identifier.

Although typically sent via the wired video connection 106, in one or more example implementations the requested information regarding how to connect to the display device 104 via a network can be sent from the display device 104 to the presentation device 102 wirelessly. In such implementations, the display device 104 receives an identifier from the presentation device 102 (e.g., via the wired video connection 106) and then broadcasts the requested information to all listening network devices (e.g., via wired or wireless connections). Embedded in the broadcast is the identifier that the display device 104 received from the presentation device 102. The intended recipient (the presentation device 102) receives the broadcast, determines that the identifier is embedded in the broadcast and thus that the information included in the broadcast is intended for the presentation device 102, and obtains from the broadcast the requested information regarding how to connect to the display device 104 via a network.

Given the information regarding how to connect to the display device 104 via a network, the network communication module 218 can establish the network connection 108 with the display device 104. The network connection 108 can be established in accordance with various different protocols supported by the display device 104 and the presentation device 102 as discussed above. For example, establishing the network connection 108 can be initiated by the presentation device 102 opening a network connection to the network address of the display device 104.

Once the network connection 108 is established, the presentation device 102 continues to send video to the display device 104 via the wired video connection 106, and various control information can optionally be communicated between the display device 104 and the presentation device 102 via the wired video connection 106. Data describing user inputs to the display device 104 are returned to the presentation device 102 via the network connection 108.

It should be noted that user inputs to the display device 104 are communicated to the presentation device 102 for the presentation device 102 to act on rather than being acted on by the display device 104. For example, if a user draws a circle on the display device 104 with his or her finger or a stylus, the display device 104 itself does not respond by acting on the user input to display a circle on the display device 104. Rather, the display device 104 sends data describing the user input to the presentation device 102 and the presentation device 102 acts on the user input by generating video including a circle at the location specified by the user input. The video including this circle is sent to the display device 104, which then displays the video including the circle.

In one or more example implementations, the display device 104 sends to the presentation device 102 data describing user inputs to the display device as the user inputs occur. For example, if a user input is drawing a circle, the display device 104 can send data to the presentation device 102 as the circle is drawn (e.g., sending data at some threshold rate, such as every 10 or 12 milliseconds). Additionally or alternatively, the display device 104 sends to the presentation device 102 data describing a user input after the user input has completed (e.g., by the user selecting a "finished" or "enter" button, by the user inputting a verbal command such as "enter").

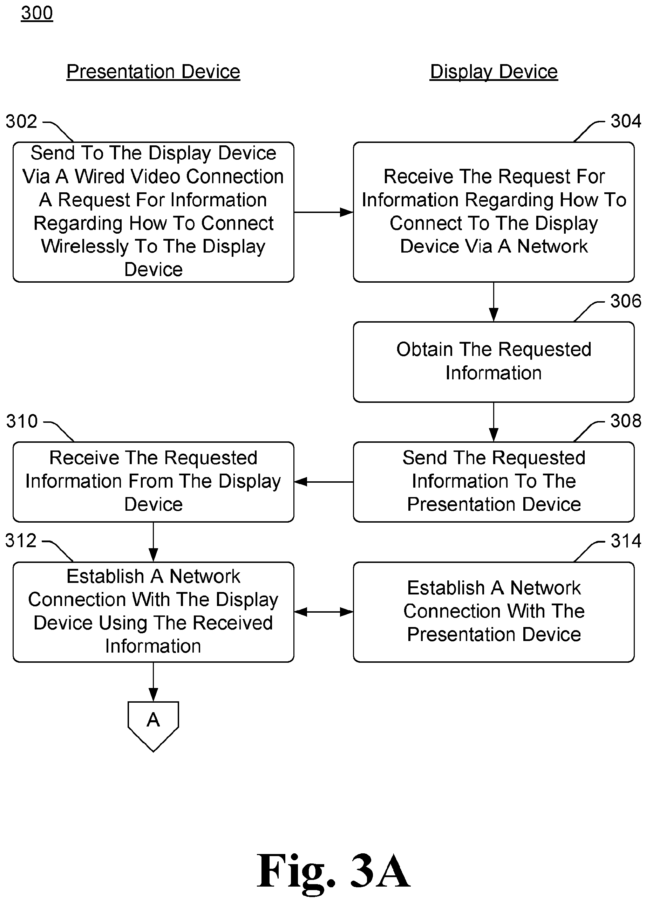

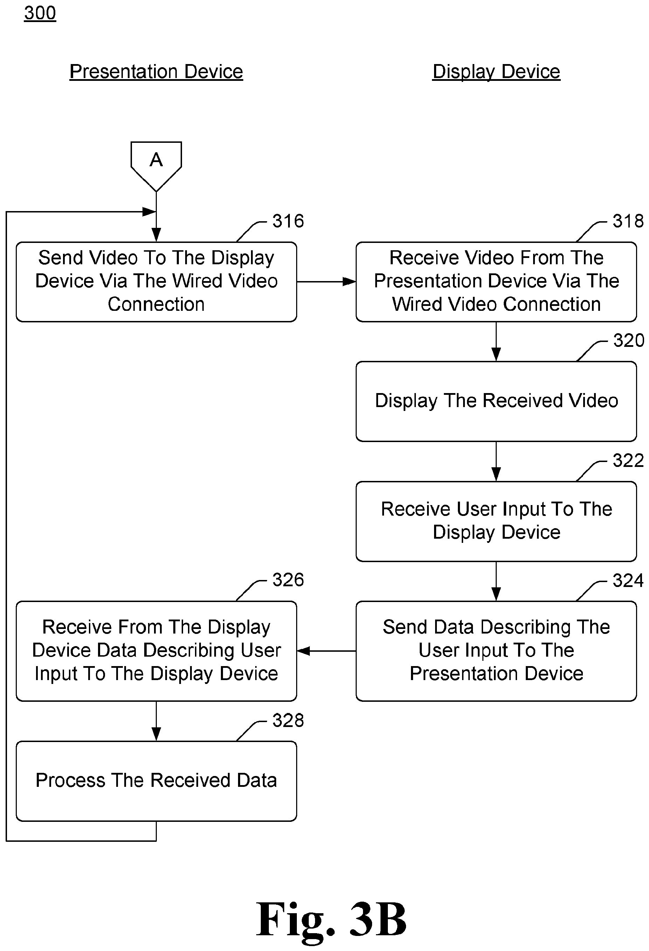

Figs. 3A and 3B are a flowchart illustrating an example process 300 for implementing the networked user interface back channel discovery via wired video connection. Process 300 can be implemented in software, firmware, hardware, or combinations thereof. Acts of process 300 illustrated on the left-hand side of Figs. 3A and 3B are carried out by a presentation device, such as presentation device 102 of Figs. 1 and 2. Acts of process 300 illustrated on the right-hand side of Figs. 3A and 3B are carried out by a display device, such as display device 104 of Figs. 1 and 2. Process 300 is shown as a set of acts and is not limited to the order shown for performing the operations of the various acts. Process 300 is an example process for implementing the networked user interface back channel discovery via wired video connection; additional discussions of implementing the networked user interface back channel discovery via wired video connection are included herein with reference to different figures.

In process 300, the presentation device sends a request to the display device via a wired video connection for information regarding how to connect to the display device via a network (act 302). The request is sent via a control channel of the wired video connection as discussed above.

The display device receives the request for information regarding how to connect to the display device via a network (act 304) and obtains the requested information (act 306). The requested information can be included in a module of the display device or otherwise obtained by a module of the display device, such as from an operating system running on the display device.

The requested information regarding how to connect to the display device via a network is sent to the presentation device (act 308). The requested information is sent via a control channel of the wired video connection as discussed above.

The presentation device receives the requested information from the display device (act 310). Based on the requested information, a network connection is established between the presentation device and the display device (acts 312 and 314). The received information can include a network address for the display device or information indicating how to obtain a network address for the display device or otherwise establish a network connection between the presentation device and the display device. In one or more example implementations, the presentation device initiates establishing the network connection with the display device by sending a request to the display device to establish the network connection.

The presentation device sends video to the display device via the wired video connection (act 316). This video can be any video selected by a user of the presentation device, or selected by a program or module of the presentation device.

The display device receives the video from the presentation device via the wired video connection (act 318) and displays the received video (act 320).

Additionally, the display device receives user input to the display device (act 322). This user input can take various forms as discussed above, such as digital ink input using a stylus or finger, user input provided via a peripheral device, and so forth.

The display device sends data describing the user input to the presentation device (act 324). The data is sent via the network connection as discussed above.

The presentation device receives the data describing the user input from the display device (act 326) and processes the received data (act 328). Processing the received data can take various forms as discussed above, such as saving the received data, changing the video sent to the display device based on the received data, and so forth.

Acts 316 - 328 can be repeated any number of times, with the presentation device continuing to send video to the display device, and the display device continuing to display that data, receive user inputs, and send data describing the user inputs to the presentation device for processing.

It should be noted that the network connection between the presentation device and the display device is established in acts 312 and 314 automatically. The user of the presentation device (or the display device) need not try to identify which display device he or she is connected to. Further the user of the presentation device (or the display device) need not select the display device from a list or other grouping of available display devices (e.g., a list of display devices that the presentation device has previously communicated with, a list of display devices on the same network as the presentation device, a list of display devices within wireless range of the presentation device, etc.). No list or other grouping of available display devices need be displayed to the user and the network connection is established without receiving user selection of the display device. The user can simply plug his or her presentation device into a video cable (e.g., an HDMI or DisplayPort cable) that is connected to the display device, and the presentation device automatically obtains from the display device the information regarding how to connect to the display device via a network. Furthermore, in situations in which the network connection is a wireless connection, the data describing the user input is sent to the presentation device via the wireless connection. The user need not plug in any additional (e.g., USB) cable to receive from the display device data describing user input to the display device.

By using the network connection, data describing the user input to the display device can be quickly communicated from the display device to the presentation device. Low bandwidth control channels in the wired video connection are not used to send the data describing the user input to the presentation device, and thus do not introduce latency into the receipt and processing of the data describing the user input.

Furthermore, the use of a wired video connection for sending the video to the display device and the network connection for sending the data describing the user input to the display device to the presentation device improves security and user trust levels when connecting a presentation device to a display device. The wired video connection, on which establishment of the network connection is based, is more difficult to spoof than some (e.g., a purely wireless) network connections. This provides the improved security and user trust levels, and can reduce prompts or confirmations by the user regarding accepting the network connection.

In the discussions herein, the presentation device 102 is described as receiving the information regarding how to connect to the display device 104 via a network, and the presentation device 102 uses that information to establish the network connection 108 with the display device 104. Additionally or alternatively, the display device 104 can request from the presentation device 102 information regarding how to connect to the presentation device 102 via a network, and the display device 104 can use that information to establish the network connection 108 with the presentation device 102. The techniques and functionality described herein remain the same, except that the establishment of the network connection 108 is initiated by the display device 104 given the information regarding how to connect to the presentation device 102 via a network received by the display device 104 from the presentation device 102.

Although particular functionality is discussed herein with reference to particular modules, it should be noted that the functionality of individual modules discussed herein can be separated into multiple modules, and/or at least some functionality of multiple modules can be combined into a single module. Additionally, a particular module discussed herein as performing an action includes that particular module itself performing the action, or alternatively that particular module invoking or otherwise accessing another component or module that performs the action (or performs the action in conjunction with that particular module). Thus, a particular module performing an action includes that particular module itself performing the action and/or another module invoked or otherwise accessed by that particular module performing the action.

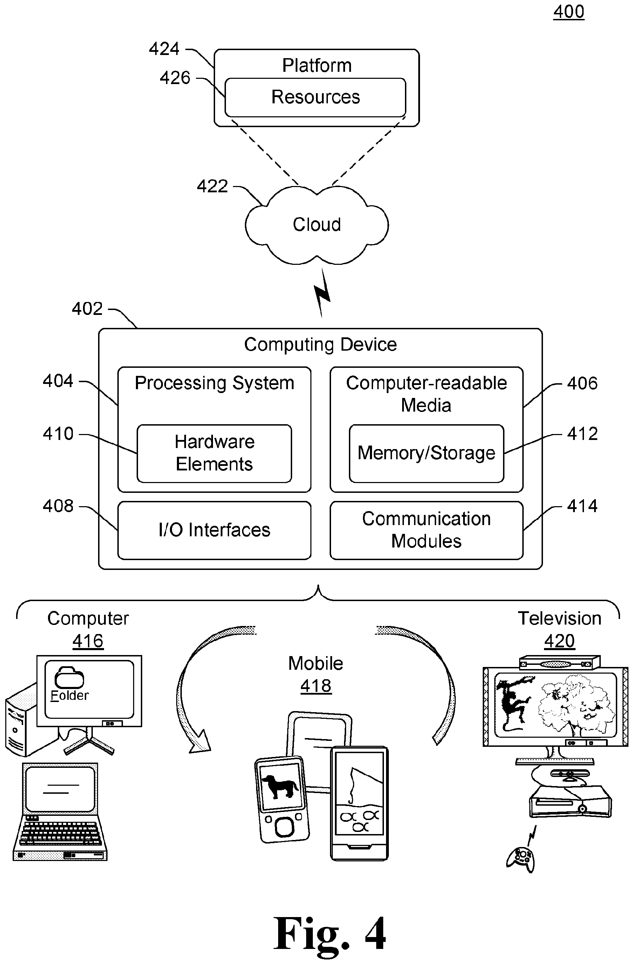

Fig. 4 illustrates an example system generally at 400 that includes an example computing device 402 that is representative of one or more systems and/or devices that may implement the various techniques described herein. The computing device 402 may be, for example, a presentation device 102 of Fig. 1 or Fig. 2, a display device 104 of Fig. 1 or Fig. 2, an on-chip system, and/or any other suitable computing device or computing system.

The example computing device 402 as illustrated includes a processing system 404, one or more computer-readable media 406, and one or more I/O Interfaces 408 that are communicatively coupled, one to another. Although not shown, the computing device 402 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 404 is representative of functionality to perform one or more operations using hardware. Accordingly, the processing system 404 is illustrated as including hardware elements 410 that may be configured as processors, functional blocks, and so forth. This may include implementation in hardware as an application specific integrated circuit or other logic device formed using one or more semiconductors. The hardware elements 410 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable media 406 is illustrated as including memory/storage 412. The memory/storage 412 represents memory/storage capacity associated with one or more computer-readable media. The memory/storage 412 may include volatile media (such as random access memory (RAM)) and/or nonvolatile media (such as read only memory (ROM), Resistive RAM (ReRAM), Flash memory, optical disks, magnetic disks, and so forth). The memory/storage 412 may include fixed media (e.g., RAM, ROM, a fixed hard drive, and so on) as well as removable media (e.g., Flash memory, a removable hard drive, an optical disc, and so forth). The memory/storage 412 may include storage-class memory (SCM) such as 3D Xpoint memory available from Intel Corporation of Santa Clara, California or Micron Technology, Inc. of Boise, Idaho. The computer-readable media 406 may be configured in a variety of other ways as further described below.

The one or more input/output interface(s) 408 are representative of functionality to allow a user to enter commands and information to computing device 402, and also allow information to be presented to the user and/or other components or devices using various input/output devices. Examples of input devices include a keyboard, a cursor control device (e.g., a mouse), a microphone (e.g., for voice inputs), a scanner, touch functionality (e.g., capacitive or other sensors that are configured to detect physical touch), a camera (e.g., which may employ visible or non-visible wavelengths such as infrared frequencies to detect movement that does not involve touch as gestures), and so forth. Examples of output devices include a display device (e.g., a monitor or projector), speakers, a printer, a network card, tactile-response device, and so forth. Thus, the computing device 402 may be configured in a variety of ways as further described below to support user interaction.

The computing device 402 also includes communication modules 414, which can include one or both of wired and wireless communication modules. The communication modules 414 allow communication with another device (e.g., presentation device or display device), including requesting information regarding how to connect to the display device via a network and establishing a network connection based on the requested information. The communication modules 414 can implement, for example, wired communication module 206 and network communication module 208 of Fig. 2, or wired communication module 216 and network communication module 218 of Fig. 2.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of computing platforms having a variety of processors.

An implementation of the described modules and techniques may be stored on or transmitted across some form of computer-readable media. The computer-readable media may include a variety of media that may be accessed by the computing device 402. By way of example, and not limitation, computer-readable media may include "computer-readable storage media" and "computer-readable signal media."

"Computer-readable storage media" refers to media and/or devices that enable persistent storage of information and storage that is tangible, in contrast to mere signal transmission, carrier waves, or signals per se. Computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" refers to a signal-bearing medium that is configured to transmit instructions to the hardware of the computing device 402, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, the hardware elements 410 and computer-readable media 406 are representative of instructions, modules, programmable device logic and/or fixed device logic implemented in a hardware form that may be employed to implement at least some aspects of the techniques described herein. Hardware elements may include components of an integrated circuit or on-chip system, an application-specific integrated circuit (ASIC), a field-programmable gate array (FPGA), a complex programmable logic device (CPLD), and other implementations in silicon or other hardware devices. In this context, a hardware element may operate as a processing device that performs program tasks defined by instructions, modules, and/or logic embodied by the hardware element as well as a hardware device utilized to store instructions for execution, e.g., the computer-readable storage media described previously.

Combinations of the foregoing may also be employed to implement various techniques and modules described herein. Accordingly, software, hardware, or program modules and other program modules may be implemented as one or more instructions and/or logic embodied on some form of computer-readable storage media and/or by one or more hardware elements 410. The computing device 402 may be configured to implement particular instructions and/or functions corresponding to the software and/or hardware modules. Accordingly, implementation of modules as a module that is executable by the computing device 402 as software may be achieved at least partially in hardware, e.g., through use of computer-readable storage media and/or hardware elements 410 of the processing system. The instructions and/or functions may be executable/operable by one or more articles of manufacture (for example, one or more computing devices 402 and/or processing systems 404) to implement techniques, modules, and examples described herein.

As further illustrated in Fig. 4, the example system 400 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 400, multiple devices are interconnected through a central computing device. The central computing device may be local to the multiple devices or may be located remotely from the multiple devices. In one or more example implementations, the central computing device may be a cloud of one or more server computers that are connected to the multiple devices through a network, the Internet, or other data communication link.

In one or more example implementations, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In one or more example implementations, a class of target devices is created and experiences are tailored to the generic class of devices. A class of devices may be defined by physical features, types of usage, or other common characteristics of the devices.

In various implementations, the computing device 402 may assume a variety of different configurations, such as for computer 416, mobile 418, and television 420 uses. Each of these configurations includes devices that may have generally different constructs and capabilities, and thus the computing device 402 may be configured according to one or more of the different device classes. For instance, the computing device 402 may be implemented as the computer 416 class of a device that includes a personal computer, desktop computer, a multi-screen computer, laptop computer, netbook, and so on.

The computing device 402 may also be implemented as the mobile 418 class of device that includes mobile devices, such as a mobile phone, portable music player, portable gaming device, a tablet computer, a multi-screen computer, and so on. The computing device 402 may also be implemented as the television 420 class of device that includes devices having or connected to generally larger screens in casual viewing environments. These devices include televisions, set-top boxes, gaming consoles, and so on.

The techniques described herein may be supported by these various configurations of the computing device 402 and are not limited to the specific examples of the techniques described herein. This functionality may also be implemented all or in part through use of a distributed system, such as over a "cloud" 422 via a platform 424 as described below.

The cloud 422 includes and/or is representative of a platform 424 for resources 426. The platform 424 abstracts underlying functionality of hardware (e.g., servers) and software resources of the cloud 422. The resources 426 may include applications and/or data that can be utilized while computer processing is executed on servers that are remote from the computing device 402. Resources 426 can also include services provided over the Internet and/or through a subscriber network, such as a cellular or Wi-Fi network.

The platform 424 may abstract resources and functions to connect the computing device 402 with other computing devices. The platform 424 may also serve to abstract scaling of resources to provide a corresponding level of scale to encountered demand for the resources 426 that are implemented via the platform 424. Accordingly, in an interconnected device implementation, implementation of functionality described herein may be distributed throughout the system 400. For example, the functionality may be implemented in part on the computing device 402 as well as via the platform 424 that abstracts the functionality of the cloud 422.

In the discussions herein, various different implementations are described. It is to be appreciated and understood that each implementation described herein can be used on its own or in connection with one or more other implementations described herein. Further aspects of the techniques discussed herein relate to one or more of the following examples.

A method implemented in a display device, the method comprising: receiving, from a presentation device via a wired video connection to the display device, a request for information regarding how to connect to the display device via a network; sending, from the display device to the presentation device via the wired video connection, the requested information; establishing, in response to a request from the presentation device based on the requested information, a network connection to the presentation device; displaying video received from the presentation device via the wired video connection; receiving, while displaying the video, user input to the display device; and sending data describing the user input to the presentation device via the network connection.

Alternatively or in addition to any of the methods or devices described herein, any one or combination of: the requested information comprising a network address of the display device; the requested information comprising an identifier of the display device that allows the display device to be distinguished from other display devices; the user inputs comprising one or both of touch inputs and digital ink inputs; the network connection comprising a wireless connection; the user inputs comprising inputs received via a peripheral device coupled to the presentation device; the sending the data describing the user input to the presentation device comprising sending the data to the presentation device without acting on the user input; the wired video connection comprising an HDMI cable; the wired video connection comprising a DisplayPort cable.

A method implemented in a presentation device, the method comprising: sending, to a display device via a wired video connection from the presentation device, a request for information regarding how to connect to the display device via a network; receiving, from the display device via the wired video connection, the requested information; establishing, based on the received information, a network connection to the display device; sending video to the display device via the wired video connection for display by the display device; receiving, from the display device via the network connection, data describing user input to the display device received by the display device while displaying the video; and processing the data describing the user input.

Alternatively or in addition to any of the methods or devices described herein, any one or combination of: further comprising changing the video being sent based on the user input, and sending the changed video to the display device; the received information comprising a network address of the display device; the establishing the network connection to the display device comprising opening a wireless network connection to the network address; the requested information comprising an identifier of the display device that allows the display device to be distinguished from other display devices; further comprising obtaining, from a record mapping display device identifiers to network addresses, a network address of the display device, and the establishing comprising opening a network connection to the network address; the wired video connection comprising an HDMI cable or a DisplayPort cable.

A display device comprising: a processor; and a computer-readable storage medium having stored thereon multiple instructions that, responsive to execution by the processor, cause the processor to: receive, from a presentation device via a wired video connection between the presentation device and the display device, a request for information regarding how to connect to the display device via a network; send to the presentation device, via the wired video connection, the requested information; establish, in response to a request from the presentation device based on the requested information, a network connection to the presentation device; display video received from the presentation device via the wired video connection; receive, while displaying the video, user input to the display device; and send data describing the user input to the presentation device via the network connection.

Alternatively or in addition to any of the methods or devices described herein, any one or combination of: the requested information comprising a network address of the display device; the requested information comprising an identifier of the display device that allows the display device to be distinguished from other display devices; wherein to establish the network connection to the presentation device is to establish the network connection to the presentation device without receiving a user selection of the display device.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method implemented in a display device, the method comprising:
receiving (304), from a presentation device via a wired video connection to the display device, a request for information regarding how to connect to the display device via a network;
sending (308), from the display device to the presentation device via the wired video connection, the requested information;
establishing (314), in response to a request from the presentation device based on the requested information, a network connection to the presentation device;
displaying (320) video received from the presentation device via the wired video connection;
receiving (322), while displaying the video, user input to the display device, wherein the user input comprises input including freehand input to a touch-sensing device of the display device;
sending (324) data describing the user input to the presentation device via the network connection; and
displaying, via the graphical user interface of the display device, the video changed by the presentation device in response to the data describing the user input.

2. The method as recited in claim 1, the requested information comprising a network address of the display device.

3. The method as recited in claim 1, the requested information comprising an identifier of the display device that allows the display device to be distinguished from other display devices.

4. The method as recited in any one of claims 1 to 3, the user inputs comprising one or both of touch inputs and digital ink inputs.

5. The method as recited in any one of claims 1 to 4, the network connection comprising a wireless connection.

6. The method as recited in any one of claims 1 to 5, the user inputs comprising inputs received via a peripheral device coupled to the presentation device.

7. The method as recited in any one of claims 1 to 6, the sending the data describing the user input to the presentation device comprising sending the data to the presentation device without acting on the user input.

8. The method as recited in any one of claims 1 to 7, the wired video connection comprising an HDMI cable or a DisplayPort cable.

9. A method implemented in a presentation device, the method comprising:
sending (302), to a display device via a wired video connection from the presentation device, a request for information regarding how to connect to the display device via a network;
receiving (310), from the display device via the wired video connection, the requested information;
establishing (312), based on the received information, a network connection to the display device;
sending (316) video to the display device via the wired video connection for display by the display device;
receiving (326), from the display device via the network connection, data describing user input to the display device received by the display device while displaying the video, wherein the user input comprises input including freehand input to a touch-sensing device of the display device,;
processing (328) the data describing the user input,
changing the video being sent based on the data describing the user input; and
sending the changed video to the display device.

10. The method as recited in claim 9, the received information
comprising a network address of the display device.

11. The method as recited in claim 10, the establishing the network connection to the display device comprising opening a wireless network connection to the network address.

12. The method as recited in claim 9, the requested information
comprising an identifier of the display device that allows the display device to be distinguished from other display devices, and the method further comprising:
obtaining, from a record mapping display device identifiers to network addresses, a network address of the display device; and
the establishing comprising opening a network connection to the network address.

13. A display device comprising:
a processor (410); and
a computer-readable storage medium (412) having stored thereon multiple instructions that, responsive to execution by the processor, cause the processor to:
receive (304), from a presentation device via a wired video connection between the presentation device and the display device, a request for information regarding how to connect to the display device via a network;
send (308) to the presentation device, via the wired video connection, the requested information;
establish (314), in response to a request from the presentation device based on the requested information, a network connection to the presentation device;
display (320) video received from the presentation device via the wired video connection;
receive (322), while displaying the video, user input to the display device; and
send (324) data describing the user input to the presentation device via the network connection.device, wherein the user input comprises input including freehand input to a touch-sensing device of the display device;
send (324) data describing the user input to the presentation device via the network connection; and
display, via the graphical user interface of the display device, the video changed by the presentation device in response to the data describing the user input.

14. The display device as recited in claim 13, wherein to establish the network connection to the presentation device is to establish the network connection to the presentation device without receiving a user selection of the display device.

## Patentansprüche

1. Verfahren, das in einer Anzeigevorrichtung implementiert wird, das Verfahren umfassend:
Empfangen (304), von einer Präsentationsvorrichtung über eine drahtverbundene Videoverbindung mit der Anzeigevorrichtung, einer Anforderung von Informationen in Bezug auf die Art und Weise der Verbindung mit der Anzeigevorrichtung über ein Netzwerk;
Senden (308), von der Anzeigevorrichtung an die Präsentationsvorrichtung über die drahtverbundene Videoverbindung, der angeforderten Informationen;
Herstellen (314), als Reaktion auf eine Anforderung von der Präsentationsvorrichtung basierend auf den angeforderten Informationen, einer Netzwerkverbindung mit der Präsentationsvorrichtung;
Anzeigen (320) eines Videos, das von der Präsentationsvorrichtung über die drahtverbundene Videoverbindung empfangen wird;
Empfangen (322), während des Anzeigens des Videos, einer Benutzereingabe in die Anzeigevorrichtung, wobei die Benutzereingabe eine Eingabe, einschließlich einer Freihandeingabe, in eine Berührungserfassungsvorrichtung der Anzeigevorrichtung umfasst;
Senden (324) von Daten, die die Benutzereingabe beschreiben, an die Präsentationsvorrichtung über die Netzwerkverbindung und
Anzeigen, über die graphische Benutzeroberfläche der Anzeigevorrichtung, des Videos, das durch die Präsentationsvorrichtung als Reaktion auf die Daten, die die Benutzereingabe beschreiben, geändert wurde.

2. Verfahren nach Anspruch 1, die angeforderten Informationen umfassend eine Netzwerkadresse der Anzeigevorrichtung.

3. Verfahren nach Anspruch 1, die angeforderten Informationen umfassend einen Identifikator der Anzeigevorrichtung, der es ermöglicht, dass die Anzeigevorrichtung von anderen Anzeigevorrichtungen unterschieden wird.

4. Verfahren nach einem der Ansprüche 1 bis 3, die Benutzereingaben umfassend eines oder beide von Berührungseingaben und Freihandschrifteingaben.

5. Verfahren nach einem der Ansprüche 1 bis 4, die Netzwerkverbindung umfassend eine drahtlose Verbindung.

6. Verfahren nach einem der Ansprüche 1 bis 5, die Benutzereingaben umfassend Eingaben, die über eine Peripherievorrichtung, die an die Präsentationsvorrichtung gekoppelt ist, empfangen werden.

7. Verfahren nach einem der Ansprüche 1 bis 6, das Senden der Daten, die die Benutzereingabe beschreiben, an die Präsentationsvorrichtung umfassend ein Senden der Daten an die Präsentationsvorrichtung, ohne auf die Benutzereingabe zu reagieren.

8. Verfahren nach einem der Ansprüche 1 bis 7, die drahtverbundene Videoverbindung umfassend ein HDMI-Kabel oder ein DisplayPort-Kabel.

9. Verfahren, das in einer Präsentationsvorrichtung implementiert wird, das Verfahren umfassend:
Senden (302), an eine Anzeigevorrichtung über eine drahtverbundene Videoverbindung von der Präsentationsvorrichtung, einer Anforderung von Informationen in Bezug auf die Art und Weise der Verbindung mit der Anzeigevorrichtung über ein Netzwerk;
Empfangen (310), von der Anzeigevorrichtung über die drahtverbundene Videoverbindung, der angeforderten Informationen;
Herstellen (312), basierend auf den empfangenen Informationen, einer Netzwerkverbindung mit der Anzeigevorrichtung;
Senden (316) eines Videos über die drahtverbundene Videoverbindung an die Anzeigevorrichtung zur Anzeige durch die Anzeigevorrichtung;
Empfangen (326), von der Anzeigevorrichtung über die Netzwerkverbindung, von Daten, die eine Benutzereingabe in die Anzeigevorrichtung beschreiben, die während des Anzeigens des Videos durch die Anzeigevorrichtung empfangen wurde, wobei die Benutzereingabe eine Eingabe, einschließlich einer Freihandeingabe, in die Berührungserfassungsvorrichtung der Anzeigevorrichtung umfasst,;
Verarbeiten (328) der Daten, die die Benutzereingabe beschreiben,
Ändern des gesendeten Videos, basierend auf den Daten, die die Benutzereingabe beschreiben; und
Senden des geänderten Videos an die Anzeigevorrichtung.

10. Verfahren nach Anspruch 9, die empfangenen Informationen umfassend eine Netzwerkadresse der Anzeigevorrichtung.

11. Verfahren nach Anspruch 10, das Herstellen der Netzwerkverbindung mit der Anzeigevorrichtung umfassend ein Öffnen einer drahtlosen Netzwerkverbindung mit der Netzwerkadresse.

12. Verfahren nach Anspruch 9, die angeforderten Informationen umfassend einen Identifikator der Anzeigevorrichtung, der es ermöglicht, dass die Anzeigevorrichtung von anderen Anzeigevorrichtungen unterschieden wird, und das Verfahren weiter umfassend:
Erhalten, von einem Datensatz, der Anzeigevorrichtungskennungen zu Netzwerkadressen zuordnet, einer Netzwerkadresse der Anzeigevorrichtung; und
das Herstellen umfassend ein Öffnen einer Netzwerkverbindung mit der Netzwerkadresse.

13. Anzeigevorrichtung, umfassend:
einen Prozessor (410) und
ein computerlesbares Speichermedium (412), auf dem mehrere Anweisungen gespeichert sind, die als Reaktion auf eine Ausführung durch den Prozessor den Prozessor veranlassen zum:
Empfangen (304), von einer Präsentationsvorrichtung über eine drahtverbundene Videoverbindung zwischen der Präsentationsvorrichtung und der Anzeigevorrichtung, einer Anforderung von Informationen in Bezug auf die Art und Weise der Verbindung mit der Anzeigevorrichtung über ein Netzwerk;
Senden (308), an die Präsentationsvorrichtung über die drahtverbundene Videoverbindung, der angeforderten Informationen;
Herstellen (314), als Reaktion auf eine Anforderung von der Präsentationsvorrichtung basierend auf den angeforderten Informationen, einer Netzwerkverbindung mit der Präsentationsvorrichtung;
Anzeigen (320) eines Videos, das von der Präsentationsvorrichtung über die drahtverbundene Videoverbindung empfangen wird;
Empfangen (322), während des Anzeigens des Videos, einer Benutzereingabe in die Anzeigevorrichtung und
Senden (324) von Daten, die die Benutzereingabe beschreiben, an die Präsentationsvorrichtung über eine Netzwerkverbindung. Vorrichtung, wobei die Benutzereingabe eine Eingabe, einschließlich einer Freihandeingabe, in eine Berührungserfassungsvorrichtung der Anzeigevorrichtung umfasst;
Senden (324) von Daten, die die Benutzereingabe beschreiben, an die Präsentationsvorrichtung über die Netzwerkverbindung und
Anzeigen, über die graphische Benutzeroberfläche der Anzeigevorrichtung, des Videos, das durch die Präsentationsvorrichtung als Reaktion auf die Daten, die die Benutzereingabe beschreiben, geändert wurde.

14. Anzeigevorrichtung nach Anspruch 13, wobei das Herstellen der Netzwerkverbindung mit der Präsentationsvorrichtung das Herstellen der Netzwerkverbindung mit der Präsentationsvorrichtung ist, ohne eine Benutzerauswahl der Anzeigevorrichtung zu empfangen.

## Revendications

1. Procédé mis en œuvre dans un dispositif d'affichage, le procédé comprenant :
une réception (304), depuis un dispositif de présentation via une connexion vidéo filaire au dispositif d'affichage, d'une requête d'informations concernant la manière de se connecter au dispositif d'affichage via un réseau ;
un envoi (308), depuis le dispositif d'affichage vers le dispositif de présentation via la connexion vidéo filaire, des informations requises ;
un établissement (314), en réponse à une requête issue du dispositif de présentation sur la base des informations requises, d'une connexion réseau au dispositif de présentation ;
un affichage (320) d'une vidéo reçue du dispositif de présentation via la connexion vidéo filaire ;
une réception (322), pendant l'affichage de la vidéo, d'une entrée utilisateur sur le dispositif d'affichage, dans laquelle l'entrée utilisateur comprend une entrée incluant une entrée à main levée sur un dispositif tactile du dispositif d'affichage ;
un envoi (324) de données décrivant l'entrée utilisateur vers le dispositif de présentation via la connexion réseau ; et
un affichage, via l'interface utilisateur graphique du dispositif d'affichage, de la vidéo modifiée par le dispositif de présentation en réponse aux données décrivant l'entrée utilisateur.

2. Procédé selon la revendication 1, les informations requises comprenant une adresse de réseau du dispositif d'affichage.

3. Procédé selon la revendication 1, les informations requises comprenant un identifiant du dispositif d'affichage qui permet au dispositif d'affichage d'être distingué d'autres dispositifs d'affichage.

4. Procédé selon l'une quelconque des revendications 1 à 3, les entrées utilisateur comprenant une ou les deux parmi des entrées tactiles et des entrées d'encre numérique.

5. Procédé selon l'une quelconque des revendications 1 à 4, la connexion réseau comprenant une connexion sans fil.

6. Procédé selon l'une quelconque des revendications 1 à 5, les entrées utilisateur comprenant des entrées reçues via un dispositif périphérique couplé au dispositif de présentation.

7. Procédé selon l'une quelconque des revendications 1 à 6, l'envoi des données décrivant l'entrée utilisateur vers le dispositif de présentation comprenant un envoi des données vers le dispositif de présentation sans agir sur l'entrée utilisateur.

8. Procédé selon l'une quelconque des revendications 1 à 7, la connexion vidéo filaire comprenant un câble HDMI ou un câble de port d'affichage.

9. Procédé mis en œuvre dans un dispositif de présentation, le procédé comprenant :
un envoi (302), vers un dispositif d'affichage via une connexion vidéo filaire depuis le dispositif de présentation, d'une requête d'informations concernant la manière de se connecter au dispositif d'affichage via un réseau ;
une réception (310), depuis le dispositif d'affichage via la connexion vidéo filaire, des informations requises ;
un établissement (312), sur la base des informations reçues, d'une connexion réseau au dispositif d'affichage ;
un envoi (316) d'une vidéo vers le dispositif d'affichage via la connexion vidéo filaire pour affichage par le dispositif d'affichage ;
une réception (326), depuis le dispositif d'affichage via la connexion réseau, de données décrivant une entrée utilisateur sur le dispositif d'affichage reçues par le dispositif d'affichage pendant l'affichage de la vidéo, dans laquelle l'entrée utilisateur comprend une entrée incluant une entrée à main levée sur un dispositif tactile du dispositif d'affichage ;
un traitement (328) des données décrivant l'entrée utilisateur,
une modification de la vidéo envoyée sur la base des données décrivant l'entrée utilisateur ; et
un envoi de la vidéo modifiée vers le dispositif d'affichage.

10. Procédé selon la revendication 9, les informations reçues comprenant une adresse de réseau du dispositif d'affichage.

11. Procédé selon la revendication 10, l'établissement de la connexion réseau au dispositif d'affichage comprenant une ouverture d'une connexion réseau sans fil sur l'adresse de réseau.

12. Procédé selon la revendication 9, les informations requises comprenant un identifiant du dispositif d'affichage qui permet au dispositif d'affichage d'être distingué d'autres dispositifs d'affichage, et le procédé comprenant en outre :
une obtention, à partir d'un enregistrement mappant des identifiants de dispositif d'affichage à des adresses de réseau, d'une adresse de réseau du dispositif d'affichage ; et
l'établissement comprenant une ouverture d'une connexion réseau sur l'adresse de réseau.

13. Dispositif d'affichage comprenant :
un processeur (410) ; et
un support de stockage lisible par ordinateur (412) ayant stockées sur celui-ci des instructions multiples qui, en réponse à une exécution par le processeur, amènent le processeur à :
recevoir (304), depuis un dispositif de présentation via une connexion vidéo filaire entre le dispositif de présentation et le dispositif d'affichage, d'une requête d'informations concernant la manière de se connecter au dispositif d'affichage via un réseau ;
envoyer (308) vers le dispositif de présentation, via la connexion vidéo filaire, les informations requises ;
établir (314), en réponse à une requête issue du dispositif de présentation sur la base des informations requises, une connexion réseau au dispositif de présentation ;
afficher (320) une vidéo reçue du dispositif de présentation via la connexion vidéo filaire ;
recevoir (322), pendant l'affichage de la vidéo, une entrée utilisateur sur le dispositif d'affichage ; et
envoyer (324) des données décrivant l'entrée utilisateur vers le dispositif de présentation via la connexion réseau. Dispositif, dans lequel l'entrée utilisateur comprend une entrée incluant une entrée à main levée sur un dispositif tactile du dispositif d'affichage ;
envoyer (324) des données décrivant l'entrée utilisateur vers le dispositif de présentation via la connexion réseau ; et
afficher, via l'interface utilisateur graphique du dispositif d'affichage, la vidéo modifiée par le dispositif de présentation en réponse aux données décrivant l'entrée utilisateur.

14. Dispositif d'affichage selon la revendication 13, dans lequel le fait d'établir la connexion réseau au dispositif de présentation consiste à établir la connexion réseau au dispositif de présentation sans recevoir une sélection utilisateur du dispositif d'affichage.
